# EUROPÄISCHE PATENTANMELDUNG

(11) **EP 3 264 321 A1**
(43) Veröffentlichungstag der Anmeldung: **03.01.2018**
(21) Anmeldenummer: 16176931.0
(22) Anmeldetag: 29.06.2016
(51) Int. Cl.: G06K 9/00, G06K 9/03, G06F 21/32, G06K 9/20

(54) **VERFAHREN UND VORRICHTUNG ZUR BERÜHRUNGSLOSEN ERFASSUNG EINER VENENSTRUKTUR EINES KÖRPERTEILS**

(71) Anmelder: Philippeit, Rainer, 2483 Ebreichsdorf (AT)
(72) Erfinder: Philippeit, Rainer, 2483 Ebreichsdorf (AT)

(57) **Zusammenfassung**

Verfahren zur berührungslosen, automatischen Erfassung eines Abbilds einer Venenstruktur eines Körperteils mit Hilfe einer Venenabbild-Erfassungsvorrichtung aufweisend eine infrarotlicht-empfindliche Bildaufnahmestufe, mit der eine Bildserie von zwei oder mehr Bildern der Venenstruktur während einer Bewegung des Körperteils als Grundlage für die Erzeugung des Abbilds aufgenommen wird.

## Beschreibung

### Technisches Feld

Die Erfindung betrifft ein Verfahren und eine Venenabbild-Erfassungsvorrichtung zur berührungslosen Erfassung eines Abbilds einer Venenstruktur eines Körperteils.

### Hintergrund

Ein solches Verfahren und eine solche Venenabbild-Erfassungsvorrichtung, nachfolgend kurz Vorrichtung genannt, ist in dem Gebrauchsmuster DE 20 2011 109 909 U1 offenbart.

Um sicherzustellen, dass eine zu identifizierende Person ihre Hand im richtigen (optimalen) Abstand vor eine Bildaufnahmestufe positioniert, wobei die Bildaufnahmestufe der Erfassung der Venenstruktur in der Hand dient, weist die Vorrichtung eine Einrichtung zur Projektion eines charakteristischen Musters auf. Die Einrichtung ist derart angeordnet und ausgebildet, dass mit Hilfe von ausgesandten elektromagnetischen Lichtstrahlen in einem für die Erfassung der Venenstruktur vorteilhaften Abstand von der Bildaufnahmestufe das charakteristische, durch die Person visuell wahrnehmbare (optische) Muster z.B. auf ihrer Handfläche erzeugt wird. Das mit Hilfe der Projektion erhaltene Aussehen des Musters ändert sich in Abhängigkeit vom Abstand zur Bildaufnahmestufe. Hält nun besagte Person ihre Hand in einen Erfassungsbereich vor die Bildaufnahmestufe, so sieht sie an der korrekten Position das charakteristische Muster, das der Person natürlich vorab bekannt sein muss, auf ihrer Handoberfläche. Hält die Person ihre Hand jedoch an eine andere Position, so sieht sie ein von dem charakteristischen Muster abweichendes anderes Muster. Somit kann die zu identifizierende Person leicht feststellen, ob sie ihre Hand korrekt - also für die Aufnahme des Abbilds der Venenstruktur optimiert - positioniert hat.

Folglich wird bei der bekannten Vorrichtung eine für die Person hilfreiche Unterstützung angeboten, deren Erfolg jedoch sehr individuell davon abhängt, ob die involvierte Person über die Bedeutung der Projektion auf der Handoberfläche Bescheid weiß und / oder diese Unterstützung annehmen möchte. Selbst wenn der richtige Umgang mit der Projektion (z.B. durch vorher erfolgte Einweisung der zu identifizierenden Person) bekannt ist, bleibt noch immer offen, ob die betroffene Person ihre Hand lange genug und ruhig genug an der korrekten Position halten kann bzw. möchte, um eine für die handvenenbasierte Personenidentifikation verwertbare Aufnahme durch die Bildaufnahmestufe zu ermöglichen. In diesem Kontext offenbart die DE 20 2011 109 909 U1, dass die Person ihre Hand für 1 Sekunde innerhalb einer Toleranzabweichung von z.B. +/- 10 mm um den optimalen Abstand halten muss, um das optimale Abbild der Venenstruktur zu erstellen. Diese Vorgabe kann von einer Person, bei er das Zusammenspiel von visueller Wahrnehmung und Motorik der Hand einwandfrei gegeben ist, durchaus erfüllt werden. Ist dieses Zusammenspiel jedoch nicht oder nur bedingt gegeben, weil zum Beispiel die Person unter Fehlsichtigkeit leidet und/oder die Hand der Person bedingt durch Stress oder Angst oder aufgrund einer Nervenerkrankung bzw. eines Nervenleidens zittert, kann der Erfassungsvorgang fehlschlagen oder die mangelhaft erfasste Venenstruktur beim nachgeschalteten IdentifikationsProzess zu Fehlergennissen führen.

Somit ist trotz visueller Unterstützung einer die Vorrichtung benutzenden Person bei der bekannten Vorrichtung keine zuverlässige Erfassung der Venenstruktur sichergestellt. Somit kann durch Fehlpositionierung und dadurch nötige Neupositionierung(en) des Körperteils der Identifikationsprozess drastisch verlängert werden und für die Person der Eindruck entstehen, dass die Vorrichtung sehr kompliziert zu handhaben oder auch fehlerhaft ist.

Die Erfindung hat sich vor diesem Hintergrund die Aufgabe gestellt, ein Verfahren und eine Vorrichtung bereitzustellen, bei der die vorangehend erörterten Probleme überwunden sind.

### Zusammenfassung der Erfindung

Diese Aufgabe wird durch ein Verfahren gemäß Anspruch 1 gelöst.

Der Gegenstand der Erfindung ist daher ein Verfahren zur berührungslosen, automatischen Erzeugung eines Abbilds einer Venenstruktur eines Körperteils mit Hilfe einer Venenabbild-Erfassungsvorrichtung aufweisend eine infrarotlicht-empfindliche Bildaufnahmestufe, mit der eine Bildserie von zwei oder mehr Bildern des Körperteiles als Grundlage für die Erzeugung des Abbilds aufgenommen wird.

Diese Aufgabe wird zudem durch eine Venenabbild-Erfassungsvorrichtung, nachfolgend kurz Vorrichtung genannt, gemäß Anspruch 9 gelöst.

Der Gegenstand der Erfindung ist daher auch eine Vorrichtung zur berührungslosen, automatischen Erfassung eines Abbilds einer Venenstruktur eines Körperteils aufweisend eine infrarotlicht-empfindliche Bildaufnahmestufe, die zum Aufnehmen von zwei oder mehr Bildern des Körperteils als Grundlage für die Erzeugung des Abbilds ausgebildet ist.

Die mit Hilfe des Verfahrens bzw. der Vorrichtung aufgenommene Bildserie dient als Grundlage für die Erzeugung eines Abbilds der Venenstruktur der betreffenden Person, um die Person mit Hilfe ihrer individuellen Venenstruktur zu identifizieren oder zu verifizieren. Diese Art der Identifikation ist z.B. unter dem Begriff der Handvenen-Identifikation bekannt. Dabei wird die spezielle Eigenschaft des venösen Bluts, nämlich eine im Vergleich zum umliegenden Gewebe erhöhte Absorption für Infrarotlicht aufzuweisen, genützt. Technisch wird diese Eigenschaft so ausgenützt, dass der betreffende Körperteil, also z.B. die Handfläche einer Person, mit Infrarotlicht im für besagte Absorption geeigneten Frequenzbereich, z.B. mit Hilfe einer Infrarotlicht-LED bzw. einer Gruppe solcher LEDs, bestrahlt wird. Im durch die Bildaufnahmestufe aufgenommenen Bild erscheinen die Venen wegen der erhöhten Infrarotlicht-Absorption dunkler als das umliegende Gewebe. Bevorzugt werden Spektralkomponenten des vom Körperteil reflektierten Lichts bei der Bildaufnahmestufe mit Hilfe eines geeigneten Filters derart gefiltert, dass im Wesentlichen nur Infrarotlicht im gewünschten Spektralbereich für die Bildaufnahme eintreten kann.

Soll eine Person für spätere Verifikation oder Identifikation registriert werden, wird zunächst mit Hilfe eines Computers aus dem zuvor gemäß der Erfindung erstellten Abbild der Venenstruktur ein sogenanntes Template generiert, welches berechnet mittels eines mathematischen Verfahrens eine digitale Repräsentation des Abbilds bildet. Dieses Template wird auf dem Computer (verschlüsselt) gespeichert.

Bei der nachfolgenden Verifikation oder Identifikation der Person wird ebenfalls gemäß der Erfindung ein Abbild der Venenstruktur generiert und verschlüsselt an den Computer übertragen wo die weitere Verarbeitung stattfindet.

Im Computer wird aus dem verschlüsselten Abbild bzw. einer Parametrisierung der Venenstruktur (wie weiter unten erörtert), ein Binärcode generiert, der die Venenstruktur bzw. ihre Parametrisierung im aufgenommen Abbild repräsentiert. Dieser Binärcode bildet einen sogenannter Hash-Wert (auch "hash-key" bezeichnet, also ein Schlüssel, mit dem nicht auf die Venenstruktur zurückgerechnet werden kann), der dann zum Vergleich mit dem Template eingesetzt wird. Das Ergebnis des Vergleichs gibt an, ob eine Person identifiziert bzw. verifiziert ist oder eben keine Identifikation oder Verifikation vorliegt. Der Hash-Wert kann aus dem Abbild bez. seiner Parametrisierung mit Hilfe einer Hash-Funktion ermittelt werden, welche eine nicht injektive Abbildung einer relativ großen Eingabemenge (Daten der Abbildung der Venenstruktur bzw. ihre Parametrisierung) in eine kleinere Zielmenge (Skalar als Binärcode) darstellt. Soweit die Parametrisierung bereits in der Venenabbild-Erfassungsvorrichtung erfolgt, kann bereits dort auch der Hash-Wert berechnet werden und somit eine hinsichtlich der an den Server zu übertragende Datenmenge reduzierte (verschlüsselte) Datenübertragung erfolgen. Dies kann die Effizienz des GesamtVerfahrens der Identifikation bzw. Verifikation erhöhen.

Die individuelle Venenstruktur eines Körperteils, die ein für eine bestimmte Person individuelles biometrisches Merkmal bildet, bzw. das Abbild dieser Venenstruktur kann grundsätzlich durch zwei Parametrisierungen charakterisiert werden. Sie kann einerseits durch den Verlauf der Venenäste oder andererseits - bevorzugt - durch die Anzahl der Knotenpunkte und / oder ihre Position wie auch ihre (vektoriellen) Abstände zueinander charakterisiert sein. Ein Knotenpunkt bzw. kurz Knoten ist jener Bereich der Venenstruktur, bei dem zumindest zwei Venenäste zusammenlaufen. Sobald das Abbild der Venenstruktur erzeugt wurde kann die Venenstruktur in Bezug auf ihre Knoten (z.B. Anzahl, Position und Inter-Konten-Abstände) und / oder den Verlauf der Venenäste analysiert werden und ihre individuelle Parametrisierung ermittelt werden.

Bei der Aufnahme der Bildserie kann mit konstanter Belichtung und mit konstantem Fokus gearbeitet werden. Dabei wird angenommen, dass der Körperteil während seiner Bewegung durch jenen Teilbereich des gesamten Erfassungsbereichs der Bildaufnahmestufe hindurchbewegt wird, in dem für die Zwecke der Erzeugung des Abbilds der Venenstruktur geeignete Bilder aufgenommen werden. Insbesondere wird jedoch mit variablem Fokus gearbeitet. Dabei ist die Bildaufnahmestufe zum automatischen Fokussieren auf den Körperteil ausgebildet. Bevorzugt kommt jedoch eine Belichtungsmessung zum Einsatz, mit deren Hilfe die Lichtintensität der Infrarotlichtquelle veränderbar ist, um optimal belichtete Bilder zu erhalten. Auch kann mit Hilfe der Belichtungsmessung die optische Blende der Bildaufnahmestufe beeinflusst werden, um für die Erzeugung des Abbilds optimierte Bilder zu erhalten. Auch kann die Bilderfassungsstufe über eine Autofokus-Funktion bzw. eine Abstandsmessung verfügen, um optimiert auf den bewegten Körperteil zu fokussieren.

So wie dies nachfolgend noch im Detail erörtert ist, wird die erhaltene Bildserie in weiterer Folge auf Erfüllung eines Kriteriums, das die Eignung zur Verwendung für die Erzeugung des Abbilds der Venenstruktur angibt, geprüft. In weiterer Folge wird unter Benutzung von jenem Bild bzw. jenen Bildern oder Bildbereichen der Bilder der Bildserie, für die das Kriterium erfüllt ist oder auch nur einer Teilmenge daraus, das Abbild der Venenstruktur durch zusammenfügen bzw. Kombinieren der geeigneten Bilder bzw. Bildbereiche oder der ausgewählten Teilmenge erzeugt. In anderen Worten ausgedrückt, werden jene Bilder oder Bildbereiche, die keine Eignung aufweisen, ausgeblendet oder gar gelöscht und nur jene Bilder oder Bildbereiche selektiert, welche die Eignung aufweisen.

Auf Grundlage des so erhaltenen Abbilds der Venenstruktur kann die zuvor erwähnte aus dem Abbild zu generierende Parametrisierung der Venenstruktur entweder direkt in der Venenabbild-Erfassungsvorrichtung oder nach Übermittlung an einen Computer bei diesem Computer erfolgen und je nach Bedarf zur Registrierung oder zur Identifizierung bzw. Verifizierung einer Person verwendet werden.

Durch die erfindungsgemäßen Maßnahmen ist in Abkehr von gängigen Maßnahmen erstmals erreicht, dass eine venenstrukturbasierte Personenidentifikation auch mit einem bewegten Körperteil durchführbar ist. Dies ermöglicht eine intuitive Benutzung der Vorrichtung durch die zu identifizierende Person. Die Person führt einfach ihren Körperteil, zumeist die Hand oder den Fuß, mit einer natürlichen Bewegung ohne unnötige Berücksichtigung von Einschränkungen hinsichtlich der Bewegungsfreiheit an die Vorrichtung heran. Die intuitive Benutzbarkeit der Vorrichtung bringt eine vortreffliche Eignung der Erfindung für die Erfassung der Venenstruktur einer Hand, und zwar sowohl an ihrer Innenseite wie auch ihrer Außenseite, aber auch der Fußsohle mit sich.

Weitere, besonders vorteilhafte Ausgestaltungen und Weiterbildungen der Erfindung ergeben sich aus den abhängigen Ansprüchen sowie der nachfolgenden Beschreibung. Dabei können Merkmale einer Kategorie der Ansprüche den korrespondierenden Merkmalen der anderen Kategorie folgend vorgesehen bzw. ausgebildet sein. Auch liegen Vorteile und Wirkungen, die im Zusammenhang mit einer Kategorie der Ansprüche erwähnt werden, ebenso bei der anderen Kategorie vor.

Bei der Vorrichtung kann die Bildserie ohne Beachtung, ob sich der Körperteil bewegt oder an einer Position verharrt aufgenommen werden. Bei der Vorrichtung wird bevorzugt währende der Bewegung des Körperteils eine Bildserie des Körperteils aufgenommen. Dabei können bereits zwei Bilder ausreichen. Bevorzugt wird eine Serie von 5, 10, 20, 30, 40, 50, 60, 70, 80, 90 oder 100 oder sogar bis zu 1000 Bildern aufgenommen. So kann z.B. in einem definierten Zeitfenster eine vordefinierte Anzahl von Bildern mit identischem Zeitabstand zueinander verteilt über das gesamte Zeitfenster aufgenommen werden. Auch kann die Aufnahme von Bildern z.B. solange erfolgen, solange sich der Körperteil innerhalb des Erfassungsbereichs der Bildaufnahmestufe bewegt. Ebenso kann die Aufnahme der Bildserie für jene Zeitspanne erfolgen, während der sich der Körperteil in eine Richtung bewegt. Auch muss die Anzahl der Bilder nicht fix vorgegeben sein. Sie kann auch in Abhängigkeit von z.B. einer automatisch ermittelten oder geschätzten Bewegungsgeschwindigkeit des Körperteils variieren, um innerhalb eines bekannten Erfassungsbereiches der Bildaufnahmestufe eine optimale Anzahl an Bildern zu erhalten.

Der Zustand der Bewegung des Körperteils kann z.B. mit Hilfe der Bildaufnahmestufe bzw. unter Benutzung der damit erstellten Bilder aber auch mit einem separaten Bewegungssensor und / oder Abstandssensors erkannt werden. So können z.B. die Größenverhältnisse des in zwei oder mehreren Bildern erkannten Körperteils bewertet werden, um die Bewegungsrichtung und / oder Bewegungsgeschwindigkeit zu erkennen.

Gemäß einem Aspekt der Erfindung wird die Bildserie während einer Abstandverringerung zwischen dem Körperteil und der Bildaufnahmestufe aufgenommen. Hiermit geht der Vorteil einher, dass die Erfassung der Bildserie frühzeitig abgeschlossen werden kann, also z.B. bevor der Körperteil den geringsten Abstand zu der Bildaufnahmestufe erreicht hat. Bevorzugt wird die Annäherung des Körperteils an die Bildaufnahmestufe automatisch erkannt. Dabei kann ein Abstands- bzw. Bewegungssensor zur Anwendung kommen, der auch unter Zuhilfenahme der Bildaufnahmestufe realisiert sein kann.

Diese Variante erlaubt eine relativ rasche Erstellung des Abbilds und Weiterverarbeitung zwecks Identifikation oder Verifikation einer Person, da die zu identifizierende Person üblicherweise intuitiv den relevanten Körperteil, z.B. die Handfläche, zu der Bildaufnahmestufe hinbewegen wird. Die Aufnahme der Bildserie kann in diesem Fall z.B. bereits vor Erreichen des kleinsten Abstands zwischen Körperteil und Bildaufnahmestufe abgeschlossen sein, sodass sich bei nachfolgender, entsprechend rascher Verarbeitung der Bildserie eine Entscheidung über Identifikation bzw. Verifikation noch vor dem aus Sicht der Person subjektiven Abschluss des Bewegungsablaufs aus Hinführen und Wegführen der Hand treffen lässt.

In dieser Variante lässt die Aufnahme der Bildserie z.B. dann stoppen, wenn der Körperteil sich in unmittelbarer Nähe der Vorrichtung (insbesondere der Bildaufnahmestufe) befindet bzw. diese berührt. Dies kann z.B. durch einen mechanischen Kontakt, der berührt wird, oder auch einen lichtempfindlichen Sensor, der das Abdunkeln durch Abdeckung mit der Hand registriert, erfolgen.

Gemäß einem weiteren Aspekt der Erfindung wird die Bildserie während einer Abstandserhöhung zwischen dem Körperteil und der Bildaufnahmestufe aufgenommen. Bevorzugt wird die Bewegung des Körperteils weg von der Bildaufnahmestufe automatisch erkannt. Dabei kann ein Abstands- bzw. Bewegungssensor zur Anwendung kommen, der auch unter Zuhilfenahme der Bildaufnahmestufe realisiert sein kann.

Diese Variante erlaubt auch dann die zuverlässige Erstellung der Bildserie, wenn die Bewegung des Körperteils z.B. durch seitliches Zuführen des Körperteils in der unmittelbaren Nähe der Bildaufnahmestufe in den Erfassungsbereich der Bildaufnahmestufe erfolgt und von dort aus der Körperteil nur mehr von der Bildaufnahmestufe wegbewegt wird, bis er den Erfassungsbereich verlässt.

In dieser Variante lässt die Aufnahme der Bildserie z.B. dann starten, wenn der Körperteil sich in unmittelbarer Nähe der Vorrichtung (insbesondere der Bildaufnahmestufe) befindet bzw. diese berührt. Dies kann z.B. durch einen mechanischen Kontakt, der berührt wird, oder auch einen lichtempfindlichen Sensor, der das Abdunkeln durch Abdeckung mit der Hand registriert, erfolgen.

Durch Kombination der beiden zuvor beschriebenen Varianten kann auch eine Bewegung, die aus besagtem Hinführen des Körperteils zu und Wegführen des Körperteils von der Bildaufnahmestufe zusammengesetzt ist, problemlos zur Erzeugung des Abbilds verarbeitet werden. In dieser Kombinations-Variante ergibt sich der Vorteil, dass sich das gesamte Bewegungsspektrum zur Erzeugung des Abbilds der Venenstruktur ausnützen lässt, was die Chance auf Vorliegen von optimalen, zur Erzeugung des Abbilds der Venenstruktur geeigneten Bildern erhöht.

Besonders bevorzugt weist die Sensorvorrichtung einen Aktivmodus zur Aufnahme der Bildserie und einen Passivmodus mit einem im Vergleich zum Aktivmodus reduziertem Energieverbrauch auf und ein Wechsel von dem Passivmodus in den Aktivmodus wird durch ein Detektieren der Präsenz eines Körpers oder Körperteils in dem Bilderfassungsbereich der Bildaufnahmestufe durchgeführt. Dies erlaubt einen relativ energiesparenden Betrieb, da die Funktionalität zur Erstellung der Bildserie wie auch ggf. deren Verarbeitung, was beides einen relativ hohen Energiebedarf aufweist, nur im Fall der tatsächlichen Benützung der Sensorvorrichtung durch eine Person aktiv sein muss.

Erfindungsgemäß wird mit der Bildserie nach ihrer Aufnahme so verfahren, dass die Sensorvorrichtung eines der Bilder oder mehrere Bilder der Bildserie auf Erfüllung eines Kriteriums, das die Eignung zur Verwendung für die Erzeugung des Abbilds der Venenstruktur angibt, prüft und jenes Bild oder jene Bilder zur Erzeugung des Abbilds verwendet, welches bzw. welche gemäß der Erfüllung des Kriteriums am geeignetsten eingestuft ist bzw. sind. Die Eignung ergibt sich aus der Anforderung der guten Erkennbarkeit der Venenstruktur im Bild, sodass als Kriterium z.B. die Schärfe und / oder die Belichtung zur Anwendung kommt. Eine Aussage über die Schärfe eines Bildes kann z.B. über die Anzahl der erkennbaren Knoten der Venenstruktur gemacht werden. Eine Aussage über die Belichtung kann z.B. über die Kontrastunterschiede im Bild zwischen Bereichen, die venöses Blut transportieren und umliegenden Gewebeteilen getätigt werden. Die Prüfung erfolgt mit Hilfe einer Bewertungsstufe der Vorrichtung, welche die entsprechende Ausbildung zum Auswerten der Bilder der Bildserie aufweist.

Die Prüfung der Erfüllung des Kriteriums kann beispielsweise nach Abschluss der Aufnahme der Bildserie erfolgen. Sie kann jedoch auch bereits während des Aufnahmevorgangs für jedes Bild erfolgen, sodass unbrauchbare Bilder sofort gelöscht werden können und die in der Vorrichtung zur Verfügung stehende Speichergröße zur Speicherung der Bildserie optimal ausnutzbar ist bzw. der Speicherbedarf geringgehalten werden kann. Die Prüfung kann jedoch auch auf Gruppen von zuvor im Zuge der Aufnahme gespeicherten Bilder der Bildserie oder die gesamte gespeicherte Bilderserie angewandt werden.

Dabei kann die Prüfung auf Erfüllung des Kriteriums auf gesamte Bilder oder Bildbereiche der Bilder angewendet werden.

Wird die Anwendung der Prüfung des Kriteriums auf gesamte Bilder angewandt, so kann das Abbild durch ein einziges am geeignetsten bewertetes Bild erzeugt werden oder durch Zusammenfügen bzw. Kombinieren einer Mehrzahl von als geeignet bewerteten Bildern erzeugt werden. Beim Zusammenfügen kann die Venenstruktur z.B. durch Mittelwertbildung der Bildinhalte der geeigneten Bilder, ggf. nach geeigneter Skalierung der Bilder, erstellt werden.

So kann z.B. unter 100 Bildern jenes Bild oder jene 10 Bilder als geeignet ausgewählt werden, das bzw. die die meisten Venenknoten aufweist / aufweisen.

Wird die Anwendung der Prüfung des Kriteriums auf Bildbereiche angewandt, kann das Abbild durch Zusammenfügen von als geeignet bewerteten Bildbereichen verschiedener Bilder erzeugt werden.

So kann ein Bild eines Körperteils in z.B. 100 Teilbereiche aufgeteilt werden. Werden nun z.B. 100 Bilder des Körperteils aufgenommen, so kann z.B. für jeden der Teilbereiche geprüft werden, in welchem der 100 Bilder er am schärfsten vorliegt und das Abbild aus den jeweiligen am geeignetsten bewerteten Teilbereichen der Bilder zusammengefügte werden.

Es sei jedoch erwähnt, dass auch eine Kombination der zuvor erörterten Varianten des Auswählens von geeigneten Bildern bzw. Bildbereichen sowie des Zusammenfügens von ganzen Bildern bzw. Bildbereichen zur Anwendung kommen kann.

Zusammengefasst wird also bei der Vorrichtung und dem Verfahren auf vorteilhafte Weise das zuvor im Detail erörterte Bilderfassungs- und Verarbeitungsverfahren verwendet, mit dessen Hilfe erstmalig auch ein bewegter Körperteil zur Identifikation oder Verifikation einer Person auf Grundlage der individuellen Venenstruktur in dem bewegten Körperteil genützt werden kann.

Das erfindungsgemäße Verfahren bzw. die erfindungsgemäße Vorrichtung kann ein Bestandteil eines Systems zur Registrierung und / oder Identifizierung wie auch Verifizierung einer Person sein, wobei das System auch weitere Merkmale aufweisen kann.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: in Form eines Blockschaltbilds eine erfindungsgemäße Sensorvorrichtung;
- Fig. 2: in Form eines Flussdiagramms ein erfindungsgemäßes Verfahren;
- Fig. 3: die Bewegung einer Hand hin zur bzw. weg von der Sensorvorrichtung;
- Fig. 4: eine weitere Bewegung der Hand in Bezug auf die Sensorvorrichtung.

### Beschreibung der Ausführungsbeispiele

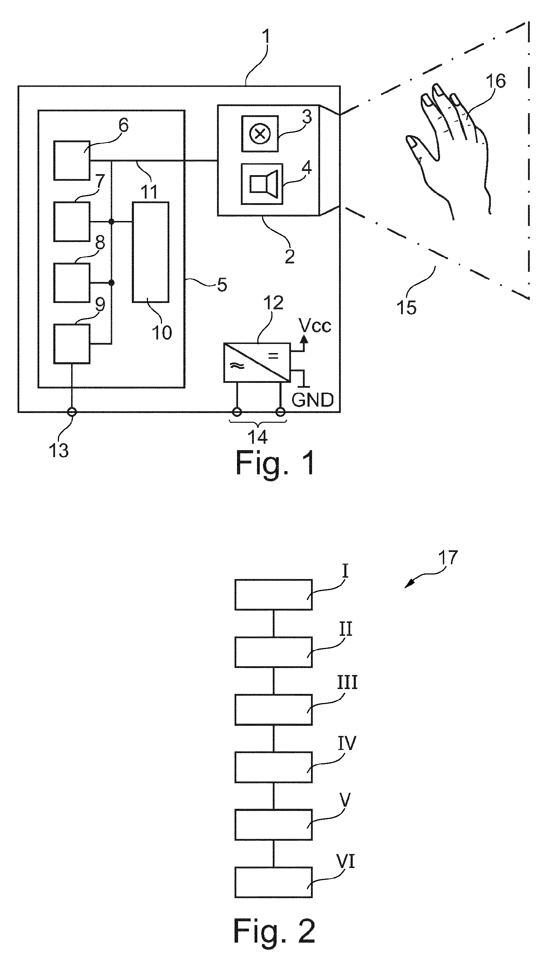

In der Figur 1 ist eine Sensorvorrichtung 1 zur berührungslosen, automatischen Erzeugung eines Abbilds einer Venenstruktur eines Körperteils 16 auf Grundlage einer Bildserie des Körperteils 16, wie z.B. der Handinnenseite einer Hand einer Person, dargestellt.

Zu diesem Zweck weist die Vorrichtung 1 eine infrarotlicht-empfindliche Bildaufnahmestufe 2, die mit Hilfe einer Infrarotlicht-Quelle 3, z.B. in Forme einer Leuchtdiode, zum Bestrahlen des Körperteils 16 innerhalb eines Erfassungsbereichs 15 und eine infrarotlicht-empfindliche digitale Kamera 4 zum Aufnehmen von digitalen Bildern des Körperteils 16 auf. Die damit aufgenommenen Bilder werden in einer Speicherstufe 10 für die weitere Verarbeitung zwischengespeichert.

Die Vorrichtung 1 weist weiterhin eine Erkennungsstufe 6 zum Erkennen der Präsenz eines Körperteils 16 innerhalb des Erfassungsbereichs 15 und zum Erkenne einer Bewegung dieses Körperteils 16 auf. Sobald eine Präsenz eines Körperteils 16 festgestellt wird, also wenn der Körperteil 16 von Außerhalb in den Erfassungsbereich 15 eingebracht wird, wird die Vorrichtung 1 von ihrem Passivmodus, in dem sie relativ wenig Energie benötigt, weil der Großteil ihrer Komponenten nicht mit der Betriebsspannung VCC versorgt wird, und lediglich die Prüfung auf Präsenz eines Körperteils 16 im Erfassungsbereich 15 durchgeführt wird, in ihren Aktivmodus umgeschaltet, in dem die Aufnahme einer Bildserien möglich ist. Sobald dann eine Bewegung des Körperteil 16 erkannt wird, wird die Serienbildaufnahme mit Hilfe der Bildaufnahmestufe 2 gestartet. Sobald in weiterer Folge mit Hilfe der Erkennungsstufe 6 erkannt wird, dass der Körperteil 16 nicht mehr im Erfassungsbereich 15 präsent ist, weil er aus diesem entfernt wurde, wird die Serienbildaufnahme gestoppt. Unabhängig davon, ob der Körperteil noch im Erfassungsbereich präsent ist, wird die Serienbildaufnahme auch dann gestoppt, wenn die maximale Anzahl an Aufnahmen, im vorliegenden Fall z.B. 100 Stück erreicht ist.

Die Vorrichtung 1 weist weiterhin eine Bewertungsstufe 7 zum Bewerten von einem der Bilder oder mehrerer Bilder der Bildserie auf Erfüllung eines Kriteriums, das die Eignung zur Verwendung für die Erzeugung des Abbilds der Venenstruktur angibt, auf. Als Kriterium kommt die Schärfe eines Bildes wie auch die Belichtung zur Anwendung. Beide Parameter haben einen Einfluss auf die Anzahl der automatisch feststellbaren Knoten in der Venenstruktur. Da bei der Aufnahme des Bilds davon ausgegangen wird, dass es sich um einen lebenden, also durchbluteten Körperteil handelt, kann auch von einer üblicherweise für diesen Körperteil typischen Knotenanzahl in der Venenstruktur ausgegangen werden. Bilder, in denen nun keine Knoten oder nur wenige Knoten der Venenstruktur vorliegen, was durch automatisches Erkennen und Zählen der im Bild erkennbaren Knoten bestimmt wird, werden als weniger geeignet für die Erzeugung des Abbilds eingestuft. Solche Bilder sind entweder unscharf oder falsch belichtet.

Die Vorrichtung 1 weist zudem eine Erzeugungsstufe 8 zum Erzeugen des Abbilds der Venenstruktur unter Verwendung jenes Bilds oder jener Bilder, welches bzw. welche gemäß der Erfüllung des Kriteriums am geeignetsten bewertet ist bzw. sind. Mit Hilfe der Erzeugungsstufe werden die als geeignet bewerteten Bilder zu dem Abbild zusammengefügt. Dabei werden identische Bereiche des Körperteils 16, die in unterschiedlichen Bildern enthalten sind, zunächst skaliert, also sprichwörtlich "übereinander gelegt", und ihre Bildinhalte gemittelt. Das Abbild repräsentiert somit in digitaler Form auf optimale Weise die in dem Körperteil 16 enthaltene Venenstruktur. In dem Abbild enthaltene Positionen der Venenknoten und ihre Abstände zueinander werden bestimmt und von der so erhaltenen Parametrisierung der Venenstruktur wird mit Hilfe einer Hash-Funktion ein Hash-Wert generiert, der als Binärcode die Parametrisierung repräsentiert.

Die Vorrichtung 1 weist zudem eine Interfacestufe 9 zum Bilden einer Schnittstelle für die Abgabe des Binärcodes an eine externe VerarbeitungsStation (nicht dargestellt), z.B. einen zentralen Server, auf, auf dem die digitalen Templates registrierter Personen gespeichert sind. Der Server ist zum Vergleichen des von der Vorrichtung 1 empfangenen Binärcodes mit den gespeicherten Templates ausgebildet, um die betreffende Person, von der das Abbild erstellt wurde, zu identifizieren.

Die Vorrichtung 1 weist weiterhin eine Spannungsversorgungs-stufe 12 auf, die mit ihren Netzanschlüssen 14 an die Netzversorgung, z.B. an ein 220 Volt Wechselstromnetz, anschließbar ist und zum Erzeugen der internen Betriebsspannung VCC gegenüber einem Bezugspotential GND ausgebildet ist. Ihre Bereitstellung der Betriebsspannung VCC kann mit Hilfe der Erkennungsstufe 6 für die einzelnen Komponenten gruppiert oder individuelle steuerbar sein, um die Vorrichtung 1 ihrem Aktivmodus oder ihrem Passivmodus zu betreiben.

In der Vorrichtung 1 sind die verschiedenen Stufen 2, 6, 7, 8, 9, 10 und ggf. auch 12 mit einem Daten-Signal-Bus verbunden. Die Stufen 6, 7, 8, 9 und 10 sind z.B. mit Hilfe einer digitalen Verarbeitungseinrichtung, die z.B. mit Hilfe eines Prozessorsystems bestehend aus einem Mikroprozessor und einem damit gekoppelten Speicher (z.B. aufweisend RAM und ROM oder auch EEPROM) usw. realisiert. Die zuvor erörterten Funktionalitäten der Stufen 6, 7, 8, 9 können durch das Zusammenspiel von Hardware des Prozessorsystems und auf dem Prozessorsystem abgearbeiteter Software realisiert sein. Auch kann ein Mikrokotroller oder ein applikations-spezifischer Halbleiterbaustein (ein sogenannter ASIC) zur Anwendung kommen. An dieser Stelle sei zudem erwähnt, dass auch die Bildaufnahmestufe 2 neben einem lichtempfindlichen Sensorelement und ggf. dem Sensorelement im Strahlengang vorgelagerter optischer Komponenten ein eigenes Prozessorsystem oder einen speziellen ASIC zur Steuerung des bzw. Verarbeitung der Signale des Sensorelements aufweisen kann.

Es sei erwähnt, dass die Erkennungsstufe 7 auch als separate, von dem Prozessorsystem unabhängige Einheit ausgeführt werden kann, so dass bei Erkennung der Präsenz des Körperteils 16 im Erfassungsbereich 15 das Prozessorsystem mit Hilfe der Erkennungsstufe 7 aktivierbar ist und anderenfalls deaktiviert bleibt.

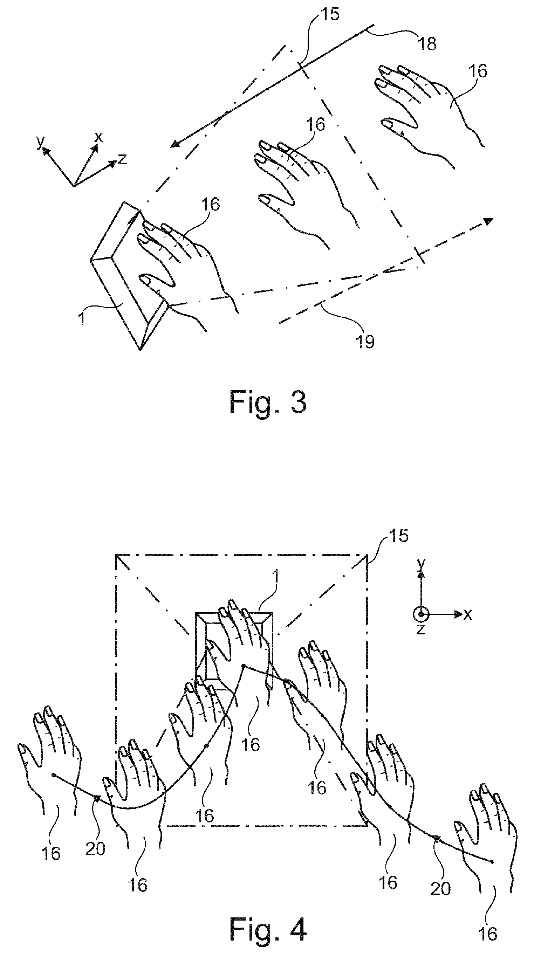

In weiterer Folge wird der Betrieb der Vorrichtung 1 mit Hilfe des in der Figur 2 als Flussdiagramm visualisierten Verfahrens 17 und unter Bezugnahme auf die Figuren 3 erörtert.

Das Verfahren 17 beginnt in einem ersten Block I, wobei die Vorrichtung 1 in ihrem Passivmodus betrieben wird. Wie in Figur 3 dargestellt, befindet sich das Körperteil 16 außerhalb des Erfassungsbereichs 15. In weiterer Folge wird das Körperteil 16 in den Erfassungsbereich 15 hineinbewegt. Daraufhin wird bei einem Block II die Präsenz des Körperteils 16 im Erfassungsbereich 15 erkannt und der Aktivmodus aktiviert. Bei einem Block III wird in weiterer Folge erkannt, dass das Körperteil 16 im Wesentlichen geradlinig in Richtung (siehe Pfeil 18) der Bildaufnahmestufe 2 bewegt wird und bei der Bewegung eine Bildserie von 100 Bildern aufgenommen. Die einzelnen Bilder werden in der Speicherstufe 10 zwischengespeichert. Danach wird bei einem Block IV geprüft, ob die Bilder das Kriterium für ihre Eignung zur Verwendung für die Erzeugung des Abbilds erfüllen. Jene Bilder, die das Kriterium erfüllen, werden in der Speicherstufe belassen. Jene Bilder, die das Kriterium nicht erfüllen, werden gelöscht. Es sei erwähnt, dass die Verfahrensschritte des Blocks III und IV auch kombiniert, für jedes Bild direkt nacheinander abgearbeitet werden können. In einem Block V wird dann das Abbild der Venenstruktur durch Zusammenfügen der als geeignet bewerteten Bilder erstellt, der Binärcode als Hash-Wert generiert und in verschlüsselter Form über die Schnittstellenstufe 9 abgegeben. Danach wird der Passivmodus eingenommen und das Verfahren bei einem Block VI beendet.

Gemäß einem weiteren Ausführungsbeispiel kann auch das Erkennen der im Wesentlichen geradlinigen Bewegung weg von der Bildaufnahmestufe 2 - siehe Figur 3, Pfeil 19 - als Auslöser für die Aufnahme der Bildserie benützt werden.

Gemäß einem weiteren Ausführungsbeispiel kann auch während der zusammengesetzten Bewegung hin zu der Bildaufnahmestufe 2 und weg von ihr die Bildserie aufgenommen werden.

Der Einsatz der Erfindung ist jedoch nicht nur auf eine lineare Bewegung hin zu bzw. weg von der Bildaufnahmestufe 2 beschränkt, wie dies zur Vereinfachung Erörterung der Funktionsweise in der Figur 3 visualisiert ist. Vielmehr erlauben die erfindungsgemäßen Maßnahmen auch eine Erstellung des Abbilds der Venenstruktur des Körperteils 16 bei einer dreidimensionalen Bewegung des Körperteils 16 vor der Bildaufnahmestufe 2, so wie dies in der Figur 4 visualisiert ist. Diese Abbildung der Bewegung zeigt als Körperteil 16 eine Hand 16, die von rechts kommend in den Erfassungsbereich 15 eingebracht wird. Dabei wird die Serienaufnahme der Bilder der Handfläche gestartet. Die Hand 16 wird dann entlang einer dreidimensionalen Bewegungsbahn 20 nach links und in Normelenrichtung auf die Bildebene nach unten hin zu der Bildaufnahmestufe 2 bewegt und anschließende weiter nach links und in Normelenrichtung auf die Bildebene weg von der Bildaufnahmestufe 2 bewegt, bis festgestellt wird, dass sie den Erfassungsbereich 15 verlässt und die Aufnahme der Bildserie gestoppt wird. In den Bildern wird das bewegte Objekt Hand erkannt und isoliert und das jeweilige Bild in Bezug auf die Erfüllung des Kriteriums für das bewegte Objekt bewertet.

Weist der Körperteil von Bild zu Bild wegen seiner Bewegung unterschiedliche Dimensionen aufweist, wird für die Zwecke der Erstellung des Abbilds das bewegte Objekt für das betreffende Bild skaliert, um die zueinander passenden Bereiche des Körperteils im zu erstellenden Abbild miteinander Flächenrichtig zu verschmelzen.

Es wird abschließend noch einmal darauf hingewiesen, dass es sich bei den vorangehend detailliert beschriebenen Figuren nur um Ausführungsbeispiele handelt, welches vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Verfahren (17) zur berührungslosen, automatischen Erfassung eines Abbilds einer Venenstruktur eines Körperteils (16) mit Hilfe einer Venenabbild-Erfassungsvorrichtung (1) aufweisend eine infrarotlicht-empfindliche Bildaufnahmestufe (2), mit der eine Bildserie von zwei oder mehr Bildern des Körperteils (16) als Grundlage für die Erzeugung des Abbilds aufgenommen wird.

2. Verfahren (17) nach Anspruch 1, wobei die Bildserie während einer Abstandverringerung zwischen dem Körperteil (16) und der Bildaufnahmestufe (2) aufgenommen wird.

3. Verfahren (17) nach Anspruch 1, wobei die Bildserie während einer Abstandserhöhung zwischen dem Körperteil (16) und der Bildaufnahmestufe (2) aufgenommen wird.

4. Verfahren (17) nach einem der vorangehenden Ansprüche, wobei die Venenabbild-Erfassungsvorrichtung (1) einen Aktivmodus zur Aufnahme der Bilderserie und einen Passivmodus mit einem im Vergleich zum Aktivmodus reduzierten Energieverbrauch aufweist und ein Wechsel von dem Passivmodus in den Aktivmodus durch ein Detektieren der Präsenz eines Körpers bzw. Körperteils in einem Bilderfassungsbereich (15) der Bildaufnahmestufe (2) durchgeführt wird.

5. Verfahren (17) nach einem der vorangehenden Ansprüche, wobei die Venenabbild-Erfassungsvorrichtung (1) eines der Bilder oder mehrere Bilder der Bildserie auf Erfüllung eines Kriteriums, das die Eignung zur Verwendung für die Erzeugung des Abbilds der Venenstruktur angibt, prüft und jenes Bild oder jene Bilder zur Erzeugung des Abbilds verwendet, welches bzw. welche gemäß der Erfüllung des Kriteriums am geeignetsten eingestuft ist bzw. sind.

6. Verfahren (17) nach Anspruch 5, wobei die Prüfung auf Erfüllung des Kriteriums auf gesamte Bilder oder Bildbereiche der Bilder angewendet wird.

7. Verfahren (17) nach Anspruch 6, wobei bei Anwendung der Prüfung des Kriteriums auf gesamte Bilder:
- das Abbild durch ein einziges am geeignetsten bewertetes Bild, oder
- das Abbild durch Zusammenfügen einer Mehrzahl von als geeignet bewerteten Bildern erzeugt wird.

8. Verfahren (17) nach Anspruch 6, wobei bei Anwendung der Prüfung des Kriteriums auf Bildbereiche das Abbild durch Zusammenfügen von als geeignet bewerteten Bilderreichen verschiedener Bilder erzeugt wird.

9. Venenabbild-Erfassungsvorrichtung (1) zur berührungslosen, automatischen Erfassung eines Abbilds einer Venenstruktur eines Körperteils (16) aufweisend eine infrarotlicht-empfindliche Bildaufnahmestufe (2), die zum Aufnehmen von zwei oder mehr Bildern des Körperteils (16) als Grundlage für die Erzeugung des Abbilds ausgebildet ist.

10. Venenabbild-Erfassungsvorrichtung (1) nach Anspruch 9, bei der mit Hilfe der Bildaufnahmestufe (2) während der Abstandsverringerung zwischen dem Körperteil (16) und der Bildaufnahmestufe (2) die Bildserie aufnehmbar ist.

11. Venenabbild-Erfassungsvorrichtung (1) nach Anspruch 9, bei der mit Hilfe der Bildaufnahmestufe (2) während der Abstandserhöhung zwischen dem Körperteil (16) und der Bildaufnahmestuf (2) die Bildserie aufnehmbar ist.

12. Venenabbild-Erfassungsvorrichtung (1) nach einem der Ansprüche 9 bis 11
- aufweisend eine Bewertungsstufe (7) zum Bewerten von einem der Bilder oder mehrerer Bilder der Bildserie auf Erfüllung eines Kriteriums, das die Eignung zur Verwendung für die Erzeugung des Abbilds der Venenstruktur angibt, und
- aufweisend eine Erzeugungsstufe (8) zum Erzeugen des Abbilds der Venenstruktur unter Verwendung jenes Bilds oder jener Bilder, welches bzw. welche gemäß der Erfüllung des Kriteriums am geeignetsten bewertet ist bzw. sind.

13. Venenabbild-Erfassungsvorrichtung (1) nach Anspruch 12, wobei die Bewertungsstufe (7) zum Prüfen auf Erfüllung des Kriteriums auf gesamte Bilder oder Bildbereiche der Bilder ausgebildet ist.

14. Venenabbild-Erfassungsvorrichtung (1) nach 13, wobei die Erzeugungsstufe (8) bei Anwendung der Prüfung des Kriteriums auf gesamte Bilder zum Erzeugen des Abbilds:
- durch ein einziges am geeignetsten bewertetes Bild, oder
- durch Zusammenfügen einer Mehrzahl von als geeignet bewerteten Bildern ausgebildet ist.

15. Venenabbild-Erfassungsvorrichtung (1) nach Anspruch 13, wobei die Erzeugungsstufe (8) bei Anwendung der Prüfung des Kriteriums auf Bildbereiche zum Erzeugen des Abbilds durch Zusammenfügen von als geeignet bewerteten Bilderreichen verschiedener Bilder ausgebildet ist.
